# EUROPEAN PATENT APPLICATION

(11) **EP 3 715 947 A1**
(43) Date of publication of application: **30.09.2020**
(21) Application number: 18855007.3
(22) Date of filing: 04.09.2018
(51) Int. Cl.: G03B 17/48

(54) **ADAPTER CLAMP FOR MOUNTING MOBILE PHONES ON A MICROSCOPE**

(30) Priority: 08.09.2017 ES 201731042 U
(71) Applicant: Angosto Gomis, Jose, 07200 Illes Balears (ES); Angosto Artigues, Ramon, 07200 Illes Balears (ES)
(72) Inventor: Angosto Gomis, Jose, 07200 Illes Balears (ES); Angosto Artigues, Ramon, 07200 Illes Balears (ES)
(74) Representative: Lahidalga de Careaga, Jose Luis
(86) International application number: PCT/ES2018/070581
(87) International publication number: WO 2019/048724

(57) **Abstract**

MOBILE TELEPHONE ADAPTOR CLAMP FOR MICROSCOPE, in particular applicable to hold a mobile telephone (7) and connect it to the eyepieces of a microscope (8), situating the lens of the camera of the mobile phone (7) so that it confronts one of these eyepieces, being configured from a set of parts (2, 3, 4, 5 and 6) linked together by means of adaptable connections that include:
- a pair of upper sliding parts (2, 3) joined together by means of a sliding connection that allows modifying the separation between their respective angled ends (21, 31) which define an adjustable space where the mobile phone (7) is held by pressure between them,
- a pair of lower connecting parts (4, 5) that are joined together by means of an tensor element that tends to keep them together like a clamp, adjustable to the two eyepieces of the microscope (8) in order to fasten the clamp by pressing on them,
- and an intermediate connecting piece (6) that links the pair of sliding upper parts (2, 3) to the pair of lower connecting parts (4, 5) by means of the rotating connection that allows regulating the respective orientation of both pairs of parts together and adjusting the position of the mobile phone (7) with respect to the microscope's eyepieces (8) in order to confront the lens of the camera of the mobile phone (7) to one of the cited eyepieces.

## Description

### PURPOSE OF THE INVENTION

The invention, as expressed in the title of this descriptive report, refers to an adapter clamp for mounting mobile phones on a microscope that provides, in its intended purpose, advantages and characteristics, described in detail later, that suppose a novelty in the current state of the art.

More specifically, the purpose of the invention is focused on an ancillary adaptor that acts as a clamp, and whose purpose is to provide practical and simple means to connect a smartphone-type mobile telephone device to a microscope, holding it in such a way that the lens of the mobile phone's camera is facing the microscope's eyepiece, in order to allow observing the object placed on the stage of the microscope through the mobile phone's camera, either directly on its screen or else in that of any monitor to which the mobile device is connected, with its principal advantages being its adaptation to different mobile phone sizes as well as to different eyepiece sizes.

### FIELD OF APPLICATION OF THE INVENTION

The field of application of this invention is framed within the sector of the industry dedicated to the manufacturing of ancillary equipment, devices and elements for mobile telephones, particularly focusing on the area of supports for fastening them, and more specifically on those dedicated to be connected to external devices.

### BACKGROUND OF THE INVENTION

As reference to the current state of the art, it can be pointed out that while different types and models of clamps or accessories exist in the market to hold the mobile devices on different applications, the applicant does not know of the existence of any that present some structural and constitutive characteristics equal or similar to those that the one claimed herein presents.

### DESCRIPTION OF THE INVENTION

The mobile telephone adaptor clamp for microscopes that the invention proposes would be an outstanding novelty within its field of application, with the characterising details that distinguish its being appropriately indicated in the final claims that accompany this description.

Specifically, what the invention proposes, as noted earlier, is a clamp that constitutes an ancillary adaptor applicable as a means to connect a smartphone-type mobile telephone device to a microscope, whose structural configuration, in addition to this connection, allows the holding of the mobile phone in such a way that the lens of the camera can face one of the eyepieces of the microscope, in order to allow observation through the cited mobile phone of the object placed on the microscope's stage, whether directly on its screen or else on that of a monitor to which it is connected. The advantage of this configuration of the clamp is that it allows its adaptation to different mobile phone sizes as well as to different eyepiece sizes.

To do this, the adaptor clamp is designed, essentially, from a set of pieces linked together by adjustable connections that allow it to be adapted to the mobile phone and to connect it to the eyepieces of the microscope. More specifically, the clamp consists, in its upper part, of two sliding fasteners, with respective angled ends, whose separation is adjustable in order to fit the mobile phone between these two ends and hold it by pressure. Its lower part consists of two parts that connect together by a tensor that holds them together like a clamp, and whose confronted faces, approximately symmetrical, determine the respective circular openings apt for adapting to the two eyepieces of the microscope and holding the clamp by pressure on them by pressure on both sides.

In addition, both pairs of parts are connected together by a rotating connecting piece, also adjustable, that allows regulating the orientation of the upper sliding fasteners with respect to the lower connecting parts with the aim of adjusting the position of the mobile phone with respect to the eyepieces of the microscope in order to confront the camera lens with one of these eyepieces.

The described mobile telephone adaptor clamp for microscopes represents, therefore, an innovation of structural and constitutive characteristics unknown until now, which, along with its practical utility, give it sufficient reason to obtain the privilege of exclusivity that is requested.

### DESCRIPTION OF THE DRAWINGS

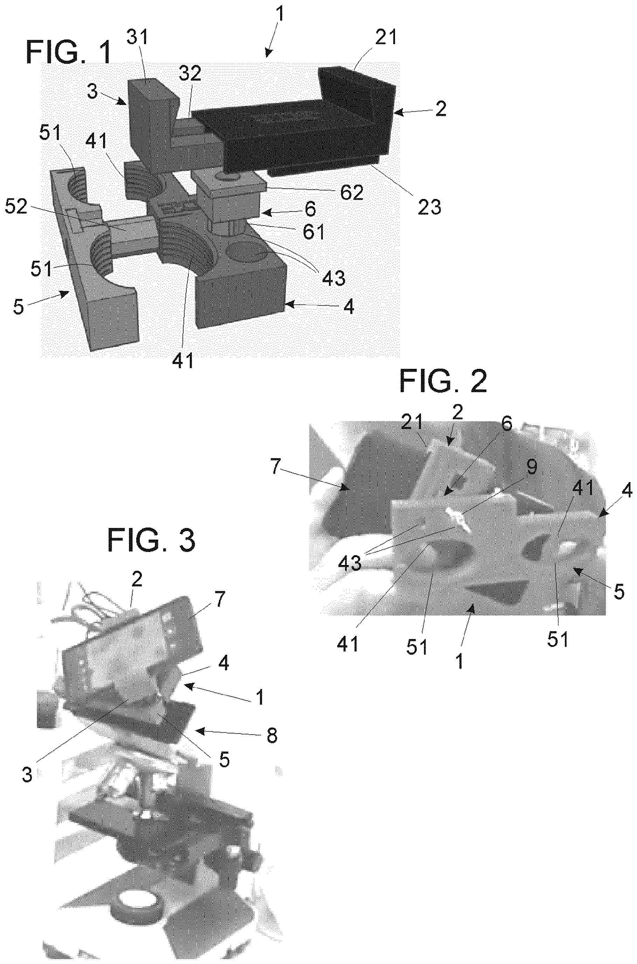

To complement the description that is being made herein and with the aim of leading to a better understanding of the invention's characteristics, this descriptive report is accompanied by, as an integral part thereof, a set of plans, in which the following has been represented, as an illustration but not limited to this:
Figure number 1. It shows a perspective view of an example of the realisation of the mobile telephone adaptor clamp for microscopes, the subject of the invention, noting the principal parts and elements that comprise it, as well as its configuration and layout.
Figure number 2. It shows a perspective view of the clamp of the invention, specifically the same example as shown in Figure 1, in this case shown by its lower part and with the mobile telephone for which it is designed incorporated in its upper part, noting the way in which it is fastened.
Figure number 3. It shows a perspective view of the same example of the adaptor clamp, according to the invention as shown in the preceding figures, in this case represented with the mobile telephone incorporated and connected to the microscopes eyepiece, noting the way to use it.

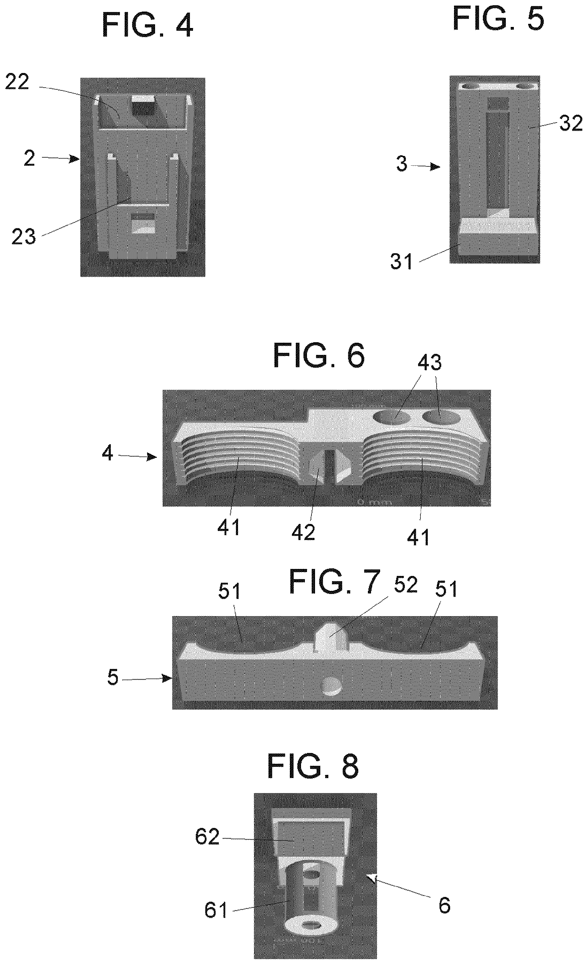

And Figures number 4, 5, 6, 7 and 8. They show respective perspective views of each of the different parts that make up the clamp of the invention, noting the configuration and parts of each of them. Specifically, Figures 4 and 5 shown their perspectives of the respective first and second upper parts of the mobile phone fastener; Figures 6 and 7 show respective view of the first and second lower parts that fasten to the microscope; and Figure 8 shows a perspective view of the intermediate rotating piece.

### PREFERRED REALISATION OF THE INVENTION

In view of the mentioned figures and in accordance with the numeration adopted, one can observe in them a non-limiting example of realisation of the mobile telephone adaptor clamp for microscopes, the subject of the invention, which comprises the parts and elements that are indicated and described in detail below.

Thus, as observed in these figures, the clamp (1) in question is configured, essentially, from a set of parts (2, 3, 4, 5 and 6) linked together by means of adjustable connectors that all the fastening of a mobile telephone (7) and its connection to the eyepieces (8) of a microscope situating this mobile phone's (7) camera lens so that it faces one of these eyepieces, allowing its adaptation to different sizes of mobile phones (7) and to different eyepieces.

More specifically, this set of parts is composed of:
- A pair of upper sliding parts (2, 3) in which the mobile phone (7) is held, which have respective angled ends (21, 31) between which the mobile phone (7) is adjusted by pressure, being joined together by means of a sliding part that allows modifying the separation between their respective angled ends (21, 31) which define an adjustable space where the mobile phone (7) is held by pressure between them. Preferably, this sliding connection is determined by an opening (22) provided in a first sliding part (2) in which the body (32) of a second sliding piece (31) is inserted snuggly, complementarily to the cited opening (22), so that by sliding one into the other and enlarging or reducing the separation between the respective angled ends (21, 31), pulling on them towards opposite sides or pressing them against each other, the size defined by the mobile phone (7) can be adjusted.
- A pair of lower connecting parts (4, 5) that are joined together by means of an tensor element (not shown) that tends to keep them together like a clamp, and whose confronted faces, approximately symmetrical, present respective pairs of semi-circular mortises (41, 51) that, once joined, determine their circular openings apt to be adjusted to the two eyepieces of the microscope (8) and to fasten the clamp by pressure by pressing on both sides of them.
- And an intermediate connecting part (6) that links the pair of sliding upper parts (2, 3) to the pair of lower connecting parts (4,5) by means of the rotating connection that allows regulating the respective orientation of both pairs of parts together and adjusting the position of the mobile phone (7) with respect to the microscope's eyepieces (8) in order to confront the lens of the camera of the mobile phone (7) to one of the cited eyepieces.
Preferably, the abovementioned tensor element that joins the lower connection parts (4, 5) is incorporated in the interior of a cross hole (42) provided in a first lower connection part (4) where the end of a rod (52) from the second lower part (5) is fit into said hole (42).
Also in the preferred way but not limited to it, the intermediate connecting piece (6) is comprised of a lower cylindrical section (61), which is connected to a perforation (43) provided for this purpose in the upper face of a first lower connection piece (4) where it is inserted and fixed at any angle, once positioned after making it rotate in order to achieve the desired angle, for example, by means of a wing-nut type manual tightening screw (9), and a square upper section (62) that is connected to a guide (23) provided for the purpose in the lower face of a first upper connection part (2), allowing it to slide to adjust its position in the guide (23) and, consequently, regulating the relative position of the pair of upper connecting parts (2, 3) with respect to the pair of lower connecting parts (4, 5).

In addition, preferably, the lower connecting part (4) has two perforations (42) to insert in either of them the cylindrical section (61) of the intermediate connecting piece (6), choosing one or the other as may be more convenient in order to better regulate the relative position of both pairs of upper parts (2, 3) in which the mobile phone (7) is held and the lower one (4, 5) that connects to the microscope.

Having sufficiently described the nature of this invention, as well as the way to put it into practice, it is not considered necessary to extend the explanation further so that any expert in the subject may understand its scope and the advantages that are derived from it, noting that, within its essentiality, it can be carried out in other forms of realisation that differ in detail from that indicated as an example, and which will also be covered by the protection that is solicited as long as it does not alter, change or modify its fundamental principle.

## Claims

1. MOBILE TELEPHONE ADAPTOR CLAMP FOR MICROSCOPE, in particular applicable to holding a mobile telephone (7) and connecting it to the eyepieces of a microscope (8), situating the lens of the camera of the mobile phone (7) confronting one of these eyepieces, **characterised by** being configured from a set of parts (2, 3, 4, 5 and 6) linked together by means of adaptable connections that include:
- a pair of upper sliding parts (2, 3) joined together by means of a sliding connection that allows modifying the separation between their respective angled ends (21, 31) which define an adjustable space where the mobile phone (7) is held by pressure between them,
- a pair of lower connecting parts (4, 5) that are joined together by means of an tensor element that tends to keep them together like a clamp, adjustable to the two eyepieces of the microscope (8) in order to fasten the clamp by pressing on them,
- and an intermediate connecting piece (6) that links the pair of sliding upper parts (2, 3) to the pair of lower connecting parts (4, 5) by means of the rotating connection that allows regulating the respective orientation of both pairs of parts together and adjusting the position of the mobile phone (7) with respect to the microscope's eyepieces (8) in order to confront the lens of the camera of the mobile phone (7) to one of the cited eyepieces.

2. MOBILE TELEPHONE ADAPTOR CLAMP FOR MICROSCOPE, according to claim 1, **characterised in that** the sliding connection between the upper sliding parts (2, 3) are linked together by means of a sliding connection determined by an opening (22) made in a first sliding part (2) in which the body (32) of the second sliding part (31) is inserted snuggly.

3. MOBILE TELEPHONE ADAPTOR CLAMP FOR MICROSCOPE, according to claim 1 or 2, **characterised in that** the confronted lower connecting parts (4, 5) are approximately symmetrical and present respective pairs of semi-circular mortices (41, 51) that, once joined, form circular openings apt for adapting to the microscope's eyepieces (8).

4. MOBILE TELEPHONE ADAPTOR CLAMP FOR MICROSCOPE, according to any of the claims 1 to 3, **characterised in that** the tensor element that joins the lower connecting parts (4, 5) is incorporated in the inside of a cross hole (42) made in a first lower connecting part (4) where a rod (52) from the second lower connecting part (5) is fastened which fits in the cross hole (42).

5. MOBILE TELEPHONE ADAPTOR CLAMP FOR MICROSCOPE according to any of the claims 1 to 4, **characterised in that** the intermediate piece of the connection (6) comprises a lower cylindrical section (61) that is connected to a perforation (43) made in the upper face of a first lower connecting part (4) where it is inserted and set at any angle, and an upper square section (62) that is connected to a guide (23) made for the purpose in the lower face of a first upper fastening part (2) allowing it to slide in order to adjust its position on the guide (23).

6. MOBILE TELEPHONE ADAPTOR CLAMP FOR MICROSCOPE, according to claim 5, **characterised in that** the lower connecting part (4) has two perforations (43) for insertion in any of them the cylindrical section (61) of the intermediate connecting piece (6).
